# FASCICULE DE BREVET EUROPEEN

(11) **EP 1 561 988 B1**
(45) Date de publication et mention de la délivrance du brevet: **24.01.2007**
(21) Numéro de dépôt: 05290152.7
(22) Date de dépôt: 24.01.2005
(51) Int. Cl.: F16L 37/088

(54) **Raccord à couplage instantané**
Schnellkupplung
Quick-acting connector

(30) Priorité: 04.02.2004 FR 0401048
(43) Date de publication de la demande: 10.08.2005
(73) Titulaire: LEGRIS SA, 35000 Rennes (FR)
(72) Inventeur: Le Quere, Philippe, 35830 Betton (FR); Vallee, Christophe, 35320 Crevin (FR)
(74) Mandataire: Robert, Jean-Pierre

(56) Documents cités:
- EP-A- 0 610 538
- US-A- 3 361 453
- US-A- 4 063 760

## Description

La présente invention concerne un raccord à couplage instantané.

Plus précisément, la présente invention a pour objet des moyens de raccordements de tubes métalliques pour transmissions hydrauliques et pneumatiques dans des conditions d'utilisation qui sont celles mentionnées dans la norme ISO 8434-1.

Ces moyens sont substitutifs des moyens de raccordement dits "à bague coupante" afin, en comparaison de ceux-ci, d'améliorer et de simplifier la mise en oeuvre du raccord et de rendre la qualité du raccordement indépendante de l'habileté et du savoir-faire de l'installateur.

A cet effet l'invention a donc pour objet un raccord à couplage instantané comprenant un corps avec une ouverture conique et un filetage extérieur, un écrou avec un orifice de passage central, un chambrage cylindrique prolongeant l'orifice de passage et taraudé sur sa partie opposée à cet orifice de passage, et une surface conique de raccordement de l'orifice de passage et du chambrage, raccord qui comprend une bague logée dans le chambrage de l'écrou et dont la face avant, tournée vers le filetage, est équipée d'un joint d'étanchéité et dont la face arrière, tournée vers la surface de raccordement conique, définit avec celle-ci un espace annulaire d'expansion radiale pour un jonc élastique fendu. Ce raccord, bien entendu, coopère avec un embout de raccordement rigide que celui-ci soit rapporté à l'extrémité d'un flexible ou soit constitué par l'extrémité d'un tube rigide de préférence métallique, l'embout étant pourvu d'une gorge externe dans laquelle "tombe" élastiquement le jonc lorsque le couplage est réalisé. Cette gorge est préréalisée notamment sur les embouts. Elle peut être cependant réalisée in situ sur une extrémité de tube qui était par exemple préalablement connectée par un raccord à bague coupante.

On comprend ainsi tout l'intérêt de l'invention comme produit de substitution d'un raccord à bague coupante, les outils à gorger l'extrémité d'un tube étant de maniement beaucoup moins délicat que ceux nécessaires à la réalisation d'un raccordement avec raccord à bague coupante.

Dans un mode préféré de réalisation, le joint d'étanchéité présente une partie de racine annulaire pour sa coopération avec la bague, et un nez annulaire qui est logé dans l'ouverture conique du corps lorsque la bague est serrée par l'écrou contre le corps.

L'avantage de cette géométrie est que le joint mis en oeuvre coopère avec le tube et avec le corps par des surfaces importantes qui sont le gage d'une très bonne étanchéité bien que la pression d'écrasement du joint soit faible, surtout si le raccordement est réalisé à la main, donc avec de faibles efforts mis en jeu.

Le joint d'étanchéité possède à l'état libre, un diamètre à sa racine voisine de la bague au moins égal au diamètre d'entrée de l'ouverture conique du corps. Par cette caractéristique, on assure la présence d'une partie de joint qui est soit pincée entre la bague et le corps ou soit précontrainte par bourrage à l'intérieur de la partie d'entrée de l'ouverture conique du corps du raccord au moment où, avant d'enfoncer le tube ou l'embout à raccorder, on a serré l'écrou sur le corps et donc on a contraint la bague intérieure contre ce corps. Cette présence de précontrainte ou de pincement est le gage d'une étanchéité renforcée des pièces du raccord vis-à-vis de l'extérieur.

L'épaisseur du nez décroît en direction de son extrémité libre de manière à occuper le mieux possible l'espace entre le tube ou l'embout et l'ouverture conique du raccord et donc ainsi avoir une surface de contact maximale du joint avec chacun de ses deux éléments.

Enfin, la surface de l'espace radial (gorge) d'expansion du joint élastique portée par la bague est conique, sensiblement parallèle à la surface de raccordement conique de l'écrou. On a ainsi une gorge à flancs inclinés vers l'arrière du raccord, dans une direction opposée à celle d'enfoncement du tube ou de l'embout.

D'autres caractéristiques et avantages de l'invention ressortiront de la description donnée ci-après d'un exemple de sa réalisation.

Il sera fait référence aux dessins annexés dans lesquels :
- la figure 1 est une demi-vue en coupe d'un raccord à couplage instantané conforme à l'invention dans son état opérationnel,
- la figure 2 et la figure 3 sont des vues illustrant la coopération de ce raccord avec l'extrémité d'un tube ou celle d'un embout,
- la figure 4 est un schéma illustrant les dispositions permettant de déconnecter l'embout ou le tube sans démontage du raccord.

Le raccord selon l'invention comporte un corps 1 qui présente un filet extérieur 1a et une ouverture d'entrée 1b conique dont la pente est normalisée à 24°. Cette ouverture conique 1b, convergente vers l'intérieur du raccord 1, aboutit à un chambrage 2 dans lequel s'ouvre un canal interne au corps 1 référencé 3.

La référence 4 désigne un corps d'écrou qui possède un orifice de passage 5 pour un tube ou pour un embout, un chambrage 6, raccordé à l'orifice de passage 5 par une paroi conique 7 divergente à l'opposé de l'orifice 5, le chambrage 6 comportant un filetage intérieur ou taraudage 6a destiné à coopérer avec le filetage 1a du corps 1.

Dans le chambrage 6, le raccord comporte une bague 8 dont la surface intérieure 8a est de même diamètre que le chambrage 2 du corps 1 et que l'orifice de passage 5 de l'écrou 4. Cette bague 8 peut être serrée par l'écrou 4 contre la face frontale 1c du corps 1 qui délimite l'entrée de l'ouverture conique 1b.

Cette bague 8 porte un joint d'étanchéité 9 annulaire qui possède une partie de racine 9a et un nez 9b. Cette partie de racine 9a est maintenue à l'avant de la bague 8 par tout moyen de fixation adéquat et à ce niveau, le diamètre extérieur de cette partie de racine 9a est au moins égal sinon supérieur au diamètre formé par l'intersection de la face 1c et de la surface 1b de l'ouverture conique.

Le nez 9b du joint se projette à l'extérieur et à l'avant de la bague 8 et son épaisseur diminue en direction de son extrémité libre.

A l'arrière, la bague 8 présente en regard de la surface conique 7 de l'écrou 4 une surface conique 8b qui définit avec la surface 7 une gorge dans laquelle peut se dilater radialement un jonc métallique élastique 10 fendu de manière connue en elle-même. A l'état libre, le diamètre intérieur de ce jonc torique est inférieur au diamètre du passage 5, de la surface intérieure 8a de la bague 8 et du chambrage 2.

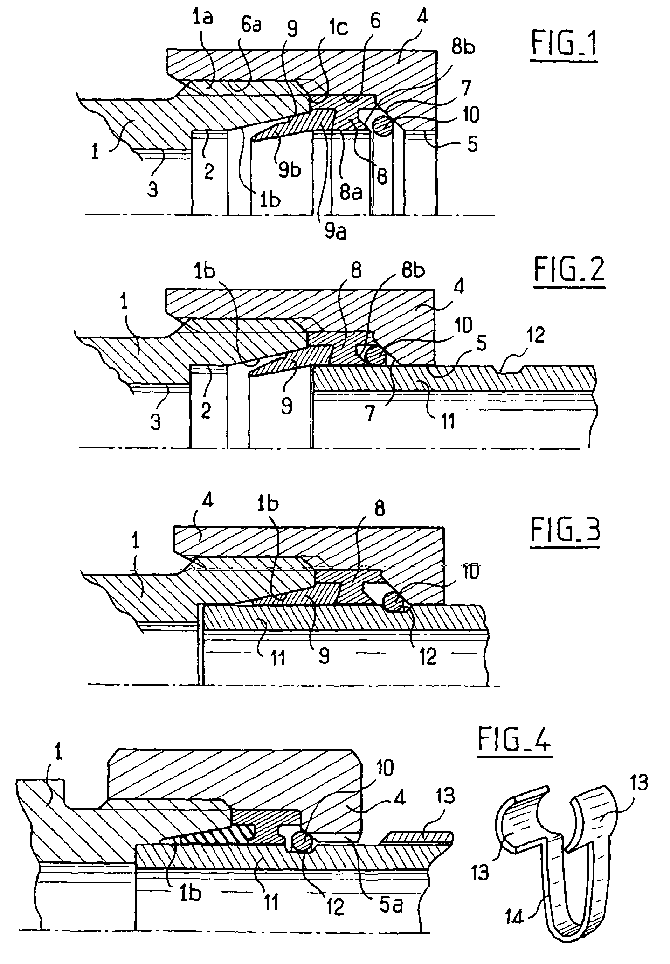

Comme on le voit aux figures 2 et 3, un tube ou un embout 11 porte une gorge 12 et est progressivement introduit dans le raccord de l'invention. Le diamètre extérieur du tube 11 est sensiblement égal à celui de l'orifice 5, au diamètre intérieur de la bague 8 et au diamètre du chambrage 2. Le diamètre intérieur du tube est quant à lui sensiblement le même que celui du passage 3 interne au corps 1.

Avant de commencer l'introduction de l'embout ou du tube 11 dans le raccord, on a préalablement serré l'écrou 4 sur le corps 1. Dans cette opération, on a créé dans la partie de racine 9a du joint 9 une précontrainte qui a pu se traduire soit par un léger pincement de ce joint entre la face 1c du corps 1 et la bague 8, soit plus généralement par un gonflement vers l'intérieur du joint permettant à celui-ci, dès cette partie de racine, d'assurer un contact intime avec l'embout ou le tube 11.

Lors de l'introduction, l'embout ou le tube 11 provoque la dilatation radiale du jonc 10 qui vient se loger entre les surfaces 7 et 8b tout en restant au contact élastique du tube 11. La poursuite de l'enfoncement fait que le nez du tube ou de l'embout atteint le joint 9 et dilate progressivement le nez 9b pour l'appliquer contre la surface conique 1b. Le nez du tube atteint enfin le chambrage 2. Dans cette position représentée à la figure 3, le jonc 10 est élastiquement tombé dans la gorge 12 et constitue une sorte de clip d'immobilisation axiale du tube par rapport au raccord. Le joint 9 est quant à lui pris en sandwich entre le tube ou embout 11 et la surface 1b conique et ce sur de grandes surfaces annulaires de contact avec le tube et avec le corps 1 du joint, si bien qu'une bonne étanchéité est assurée dans cet espace entre corps et tube par un joint qui forme une sorte de coin de remplissage de cet espace.

La figure 4 illustre une variante de réalisation des figures précédentes dans laquelle le passage 5 pour le tube ou l'embout 11 est pourvu de deux dégagements circonférentiels 5a pour qu'un poussoir en deux parties 13 réunies par une poignée 14 par exemple, puisse être glissé dans ses logements afin d'atteindre le jonc 10 et forcer son écartement pour le loger entre les surfaces 7 et 8b. Le jonc est ainsi sorti de la gorge 12 et le tube ou l'embout 11 peuvent être extraits du raccord par mouvement relatif longitudinal. Il ne s'agit pas du mode préféré de déconnexion. Ce dernier est réalisé tout simplement par démontage du raccord en dévissant l'écrou 4 par rapport au corps 1. Il est alors possible d'accéder à la bague 8, au joint 9 et jonc 10 que l'on peut séparer du raccord et que l'on peut remplacer soit par une bague 8, un jonc 10 et un joint 9 soit par une bague coupante classique afin d'établir un raccord beaucoup plus commun dans ce type d'installation. Dans ces conditions, on mettra en place de préférence une extrémité de tube ou un embout 11 dépourvu de gorge 12.

## Revendications

1. Raccord à couplage instantané comprenant un corps (1) avec une ouverture conique (1b) et un filetage extérieur (1a), un écrou (4) avec un orifice de passage (5) central et un chambrage cylindrique (6) prolongeant l'orifice (5) de passage et taraudé sur sa partie (6a) opposée à cet orifice de passage (5), et une surface conique (7) de raccordement de l'orifice de passage (5) et du chambrage (6), **caractérisé en ce qu'**il comprend une bague (8) logée dans le chambrage (6) de l'écrou (4) dont la face avant, tournée vers le filetage (6a), est équipée d'un joint (9) d'étanchéité et dont la face arrière (6b), tournée vers la surface de raccordement (7), définit avec celle-ci un logement d'expansion radial pour un jonc élastique (10) fendu.

2. Raccord selon la revendication 1, **caractérisé en ce que** le joint (9) d'étanchéité présente une partie de racine annulaire (9a) pour sa coopération avec la bague (8), et un nez annulaire (9b) qui est logé dans l'ouverture conique (1b) du corps (1) lorsque la bague (8) est serrée par l'écrou contre le corps.

3. Raccord selon la revendication 2, **caractérisé en ce que** l'épaisseur du nez (9) décroît en direction de son extrémité libre.

4. Raccord selon la revendication 2 ou la revendication 3, **caractérisé en ce que** le joint d'étanchéité (9) possède, à l'état libre, un diamètre extérieur au voisinage de la bague au moins égal au diamètre d'entrée de l'ouverture (1b) conique du corps (1).

5. Raccord selon l'une quelconque des revendications précédentes, **caractérisé en ce que** la surface (8b) portée par la bague (8) en regard de la surface (7) de l'écrou, est conique et est sensiblement parallèle à cette surface (7) conique de l'écrou.

## Claims

1. A quick coupling comprising a body (1) with a conical opening (1b) and an outside thread (1a), a nut (4) with a central through orifice (5) and a cylindrical counterbore (6) extending the through orifice (5) and tapped over its portion (6a) that is remote from the through orifice (5), and a conical surface (7) connecting the through orifice (5) to the counterbore (6), the coupling being **characterized in that** it comprises a ring (8) housed in the counterbore (6) of the nut (4), the ring having a front face directed towards the thread (6a) that is fitted with a sealing gasket (9) whose rear face (6b) facing towards the coupling surface (7) co-operates therewith to define a radial expansion housing for a split spring washer (10).

2. A coupling according to claim 1, **characterized in that** the sealing gasket (9) presents an annular root portion (9a) for co-operating with the ring (8), and an annular nose (9b) which is housed in the conical opening (1b) of the body (1) when the ring (8) is clamped by the nut against the body.

3. A coupling according to claim 2, **characterized in that** the thickness of the nose (9) decreases towards its free end.

4. A coupling according to claim 2 or claim 3, **characterized in that**, in the free state, the sealing gasket (9) possesses an outside diameter in the vicinity of the ring which is at least equal to the inlet diameter of the conical opening (1b) in the body (1).

5. A coupling according to any preceding claim, **characterized in that** the surface (8b) carried by the ring (8) facing the surface (7) of the nut, is conical and substantially parallel to said conical surface (7) of the nut.

## Patentansprüche

1. Schnellverbinder, umfassend einen Körper (1) mit einer konischen Öffnung (1b) und einem Außengewinde (1a), eine Mutter (4) mit einer zentralen Durchtrittsöffnung (5) und einer zylindrischen Aussparung (6), welche die Durchtrittsöffnung (5) verlängert und auf ihrem Abschnitt (6a), der dieser Durchtrittsöffnung (5) abgewandt ist, mit einem Gewinde versehen ist, und eine konische Fläche (7) zum Verbinden der Durchtrittsöffnung (5) und der Aussparung (6), **dadurch gekennzeichnet, dass** er einen Ring (8) umfasst, der in der Aussparung (6) der Mutter (4) untergebracht ist, deren zum Gewinde (6a) gewandte Vorderseite mit einem Dichtring (9) versehen ist und deren zur Verbindungsfläche (7) gewandte Rückseite (6b) mit dieser eine eine radiale Ausdehnung ermöglichende Aufnahme für einen elastischen geschlitzten Federring (10) begrenzt.

2. Verbinder nach Anspruch 1, **dadurch gekennzeichnet, dass** der Dichtring (9) für sein Zusammenwirken mit dem Ring (8) einen ringförmigen Fußabschnitt (9a) aufweist sowie eine ringförmige Nase (9b), die in der konischen Öffnung (1b) des Körpers (1) aufgenommen ist, wenn der Ring (8) durch die Mutter gegen den Körper gedrückt ist.

3. Verbinder nach Anspruch 2, **dadurch gekennzeichnet, dass** die Dicke der Nase (9) in Richtung ihres freien Endes abnimmt.

4. Verbinder nach Anspruch 2 oder 3, **dadurch gekennzeichnet, dass** der Dichtring (9) im freien Zustand in der Nähe des Rings einen Außendurchmesser hat, der mindestens gleich dem Eintrittsdurchmesser der konischen Öffnung (1 b) des Körpers (1) ist.

5. Verbinder nach einem der vorhergehenden Ansprüche, **dadurch gekennzeichnet, dass** die an dem Ring (8) ausgebildete, der Fläche (7) der Mutter gegenüberliegende Fläche (8b) konisch und im Wesentlichen parallel zu dieser konischen Fläche (7) der Mutter ist.
